# DEMANDE DE BREVET EUROPEEN

(11) **EP 4 459 400 A2**
(43) Date de publication de la demande: **06.11.2024**
(21) Numéro de dépôt: 24201449.6
(22) Date de dépôt: 10.08.2018
(51) Int. Cl.: G05B 19/418

(54) **PROCÉDÉ DE FABRICATION DE RÉCIPIENTS AU SEIN D'UNE LIGNE DE PRODUCTION, AVEC ADAPTATION DE LA CADENCE DE PRODUCTION À UN INCIDENT SUR LA LIGNE**

(30) Priorité: 06.09.2017 FR 1758218
(62) Demande divisionnaire de: 18749823.3
(71) Demandeur: Sidel Participations, 76930 Octeville-sur-Mer (FR)
(72) Inventeur: PASQUIER, Hervé, 76930 OCTEVILLE-SUR-MER (FR); DELAUNAY, Arnaud, 76930 OCTEVILLE-SUR-MER (FR)
(74) Mandataire: Sidel Group

(57) **Abrégé**

Procédé de pilotage d'une installation (**1**) de production de récipients (**2**) à partir d'ébauches (**3**) en matière plastique, cette installation (**1**) comprenant :
- au moins une unité (**4**) de conditionnement thermique des ébauches (**3**) et au moins une unité (**5**) de formage des récipients (**2**) ;
- au moins une unité (**8, 9**) de transfert des récipients (**2**) vers une unité (**6, 7**) de remplissage d'étiquetage ;
- une unité (**41**) de contrôle qui commande au moins l'unité (**4**) de conditionnement thermique, l'unité (**5**) de formage et l'unité (**8, 9**) de transfert en leur imposant à chacune une consigne de vitesse proportionnelle à une cadence de production des récipients (**2**) ;
ce procédé comprenant les opérations consistant à :
- détecter un incident ;
- déterminer une réduction de la cadence de production induite par l'incident ;
- appliquer cette réduction à la consigne de vitesse.

## Description

L'invention a trait à la manutention d'articles ; elle concerne, plus précisément, un procédé de pilotage d'une installation de manutention d'articles.

Une telle installation est classiquement équipée, d'une part, d'au moins un système de transport des articles, qui comprend au moins un support mobile pour les articles et une motorisation couplée à ce support pour le déplacer le long d'un trajet de transport, et, d'autre part, d'une unité électronique ou informatique de contrôle reliée à la motorisation et programmée pour entraîner celle-ci selon une consigne prédéterminée de vitesse, proportionnelle à une cadence de transport des articles procurée par l'installation.

Lorsqu'un incident se produit, qui affecte le fonctionnement de l'installation, il est courant d'arrêter immédiatement celle-ci pour permettre l'intervention d'un opérateur chargé de la maintenance de l'installation.

Pendant l'intervention de l'opérateur de maintenance, l'installation est à l'arrêt ; la production est interrompue. Il en résulte d'importantes pertes de productivité.

Un exemple d'application est la fabrication des récipients à partir d'ébauches en matière plastique.

Cette fabrication est ordinairement réalisée au sein d'une ligne de production comprenant au moins :
- une unité de conditionnement thermique des ébauches,
- une unité de formage des récipients à partir des ébauches conditionnées thermiquement ;
- une unité de transfert des récipients formés vers une unité d'étiquetage ou de remplissage ;
- et une unité de contrôle qui commande l'unité de conditionnement thermique, l'unité de formage et l'unité de transfert, l'unité de transfert et l'unité d'étiquetage ou de remplissage en leur imposant à chacune une consigne de vitesse proportionnelle à une cadence de production des récipients.

Lorsqu'un incident affecte une telle ligne de production (par ex. défaut de fermeture d'un moule équipant l'unité de formage ; limitation intempestive du débit d'injection dans cette même unité de formage ; épuisement d'un stock d'étiquettes dans l'unité d'étiquetage), il est connu d'arrêter la ligne de production pour permettre à un opérateur de maintenance de conduire une intervention au terme de laquelle la ligne de production peut redémarrer.

Pendant l'intervention cependant, la ligne est à l'arrêt ; ce faisant, les récipients ne sont pas fabriqués et la production, qui, sur une ligne ordinaire dont l'unité de formage est équipée d'une vingtaine de moules atteint ordinairement plusieurs dizaines de milliers récipients par heure, est interrompue.

Un objectif est de permettre, dans la mesure du possible, un maintien de la production alors même qu'un incident affecte l'installation.

A cet effet, il est proposé, en premier lieu, un procédé de pilotage d'une installation de manutention d'articles, cette installation comprenant au moins :
- Un système de transport des articles, qui comprend au moins un support mobile et une motorisation, couplée au support mobile pour déplacer celui-ci le long d'un trajet de transport ;
- Une unité de contrôle reliée à la motorisation et programmée pour entraîner celle-ci selon une consigne prédéterminée de vitesse, proportionnelle à une cadence de transport des articles procurée par l'installation ;
ce procédé comprenant les opérations consistant à :
- Détecter un incident susceptible d'affecter le fonctionnement de l'installation ;
- Calculer, par l'unité de contrôle, une réduction de la cadence de production, induite par l'incident ;
- Appliquer cette réduction à la consigne de vitesse.

Selon un mode particulier de réalisation, dans lequel les articles sont des récipients et dans lequel le système de transport des récipients est une unité d'étiquetage comprenant un carrousel pourvu d'une pluralité de postes de traitement, et de plusieurs dispositifs d'étiquetage périphériques, sont prévues les opérations consistant à :
- Détecter une indisponibilité d'au moins un dispositif d'étiquetage
- Réduire la consigne de vitesse appliquée à l'unité d'étiquetage d'un taux égal au taux d'indisponibilité des dispositifs d'étiquetage ;
- Shunter le(s) dispositif(s) d'étiquetage indisponible(s) ;
- Commander l'étiquetage de l'ensemble des récipients au moyen des dispositifs d'étiquetage opérationnels.

Selon un autre mode de réalisation, dans lequel le système de transport est une unité de transfert équipée d'un convoyeur linéaire qui s'étend d'un point d'entrée jusqu'à un point de sortie, et de capteurs chacun apte à détecter une accumulation des articles sur le convoyeur, sont prévues les opérations consistant à :
- Détecter une accumulation d'articles sur le convoyeur ;
- Déterminer une réduction de la vitesse à appliquer à la motorisation d'un taux proportionnel au niveau d'accumulation détecté ;
- Appliquer la réduction de la vitesse à la motorisation.

Il est proposé, en deuxième lieu, un procédé de pilotage d'une installation de production de récipients à partir d'ébauches en matière plastique, cette installation comprenant :
- plusieurs unités de traitement, à savoir au moins une unité de conditionnement thermique des ébauches et au moins une unité de formage des récipients à partir des ébauches conditionnées thermiquement ;
- au moins une unité de transfert des récipients formés vers une unité de remplissage ou une unité d'étiquetage ;
- une unité de contrôle qui commande au moins l'unité de conditionnement thermique, l'unité de formage et l'unité de transfert en leur imposant à chacune une consigne de vitesse proportionnelle à une cadence de production des récipients ;
ce procédé comprenant les opérations consistant à :
- détecter un incident susceptible d'affecter le fonctionnement de l'installation ;
- déterminer une réduction de la cadence de production induite par l'incident ;
- appliquer cette réduction à la consigne de vitesse de chaque unité de traitement ou de transfert.

Selon un mode de réalisation, sont prévues les opérations consistant à :
- détecter la fin de l'incident ;
- augmenter la cadence de production jusqu'à une valeur nominale ;
- augmenter la consigne de vitesse de chaque unité de traitement ou de transfert jusqu'à une valeur nominale.

L'augmentation des consignes de vitesse peut être effectuée par une accélération dont la force est inversement proportionnelle à la décélération induite par la réduction de la consigne de vitesse consécutive à la réduction de la cadence.

Grâce à un tel procédé, la production est maintenue, même à cadence réduite, aussi longtemps qu'il n'est pas indispensable d'interrompre la production.

Il en résulte une minimisation des interruptions totales de production, et par conséquent une productivité globale accrue.

D'autres objets et avantages de l'invention apparaîtront à la lumière de la description d'un mode de réalisation, faite ci-après en référence aux dessins annexés dans lesquels :
- la **FIG.1** est une vue schématique montrant une partie d'une ligne de production de récipients à partir d'ébauches en matière plastique ;
- la **FIG.2** est une vue schématique montrant une autre partie de la ligne de production de récipients ;
- la **FIG.3** est une vue schématique montrant encore une autre partie de la ligne de production de récipients.

Sur les dessins est partiellement représentée une installation **1** de manutention d'articles **2, 3,** qui comprend au moins :
- un système de transport des articles, qui comprend au moins un support mobile et une motorisation couplée au support mobile pour déplacer celui-ci le long d'un trajet de transport ;
- une unité de contrôle reliée à la motorisation et programmée pour entraîner celle-ci selon une consigne prédéterminée de vitesse, proportionnelle à une cadence de transport des articles procurée par l'installation.

Les articles sont par exemple des corps creux ; il peut notamment s'agir de récipients **2** ou d'ébauches **3** (par ex. des préformes) de récipients. Ainsi, dans l'exemple illustré, l'installation **1** est une installation de production de récipients **2** à partir d'ébauches **3** en matière plastique (tel que PET).

Cette installation **1** comprend plusieurs unités de traitement, à savoir au moins :
- une unité **4** de conditionnement thermique des ébauches **3,**
- une unité **5** de formage des récipients **2** à partir des ébauches **3** conditionnées thermiquement ;
- le cas échéant, une unité **6** de remplissage ;
- éventuellement une unité **7** d'étiquetage ;

L'installation **1** comprend aussi au moins une unité **8, 9** de transfert des récipients **2** formés vers l'unité **6** de remplissage ou l'unité **7** d'étiquetage.

L'unité **4** de conditionnement thermique, l'unité **5** de formage, l'unité **6** de remplissage, l'unité **7** d'étiquetage et chaque unité **8, 9** de transfert peuvent chacune être considérée comme un système de transport, auquel peut éventuellement être associée une fonction appliquée aux ébauches **3** (par ex. le conditionnement thermique) ou aux récipients **2** (par ex. le formage, le remplissage ou l'étiquetage).

A ce titre, l'unité **4** de conditionnement thermique, l'unité **5** de formage, l'unité **6** de remplissage, l'unité **7** d'étiquetage et chaque unité **8, 9** de transfert comprennent chacune au moins un support mobile et une motorisation couplée au support mobile pour déplacer celui-ci le long d'un trajet **T** de transport.

Ainsi, l'unité **4** de conditionnement thermique est équipée d'une chaîne **10** pourvue de maillons portant chacun un support **11** (appelé tournette) auquel est suspendue une ébauche **3.** Cette chaîne **10** circule sur des roues **12** dont l'une au moins est entraînée par une motorisation **13.**

L'unité **5** de formage est équipée d'un carrousel **14** sur lequel sont montés des moules **15** à l'empreinte d'un modèle de récipient, dans chacun desquels une ébauche **3** ayant subi un conditionnement thermique préalable est introduite pour y être formée à cette empreinte par injection d'un gaz (ordinairement de l'air) sous pression. A cet effet, l'unité **5** de formage est équipée, pour chaque moule **15,** d'un dispositif **16** d'injection comprenant au moins une électrovanne **17.**

Le carrousel **14** est entraîné en rotation cyclique par une motorisation **18.**

L'unité **6** de remplissage est également équipée d'un carrousel **19** sur lequel sont montés des postes **20** de remplissage pourvus chacun d'une vanne **21** de remplissage par laquelle un contenu (liquide, pâteux ou encore pulvérulent) est introduit dans un récipient **2.**

Ce carrousel **19** est également entraîné en rotation cyclique par une motorisation **22.**

L'unité **7** d'étiquetage est, elle aussi, équipée d'un carrousel **23** pourvu d'une pluralité de postes **24** de traitement aptes chacun à accueillir un récipient **2,** et de plusieurs dispositifs **25** d'étiquetage périphériques.

Chaque poste **24** de traitement est configuré pour maintenir un récipient **2** et pour l'entraîner en rotation autour de son axe propre, tout en le faisant circuler au droit d'un dispositif **25** d'étiquetage périphérique.

Ce carrousel **23** est également entraîné en rotation cyclique par une motorisation **26.**

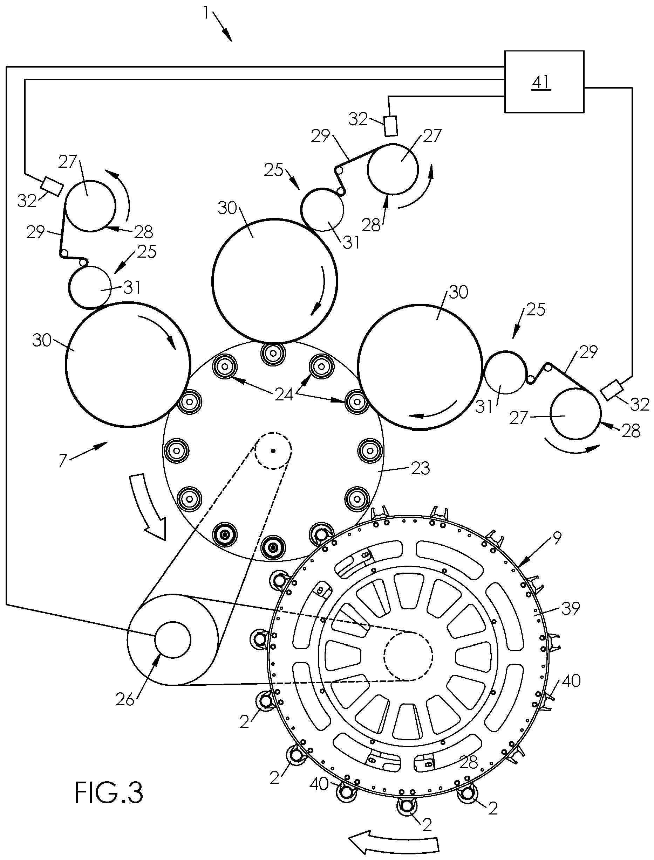

Chaque dispositif **25** d'étiquetage assure l'étiquetage d'une partie des récipients **2.** Ainsi, dans l'exemple illustré sur la **FIG.3****,** l'unité **7** d'étiquetage est équipée de trois dispositifs **25** d'étiquetage qui assurent chacun l'étiquetage d'un tiers des récipients **2.**

Selon un mode de réalisation particulier, chaque dispositif **25** d'étiquetage comprend un dérouleur **27** sur lequel est montée une bobine **28** incluant un film **29** porteur d'étiquettes enroulé sur lui-même, un cylindre **30** applicateur tangent au carrousel **23** et sur lequel circule le film **29** pour permettre l'enroulement d'une étiquette sur un récipient **2,** et, le cas échéant, un ou plusieurs rouleau(x) **31** intermédiaire(s) de tension et/ou de guidage du film **29,** intercalé(s) entre le dérouleur **27** et le cylindre **30** applicateur.

Comme illustré sur la **FIG.3****,** l'unité **7** d'étiquetage est avantageusement équipée, pour chaque dispositif **25** d'étiquetage, d'un capteur **32** (par ex. optique) propre à détecter une indisponibilité (et donc une défaillance) du dispositif **25** d'étiquetage - le plus couramment l'épuisement du film **29** (par ex. par épuisement de la bobine).

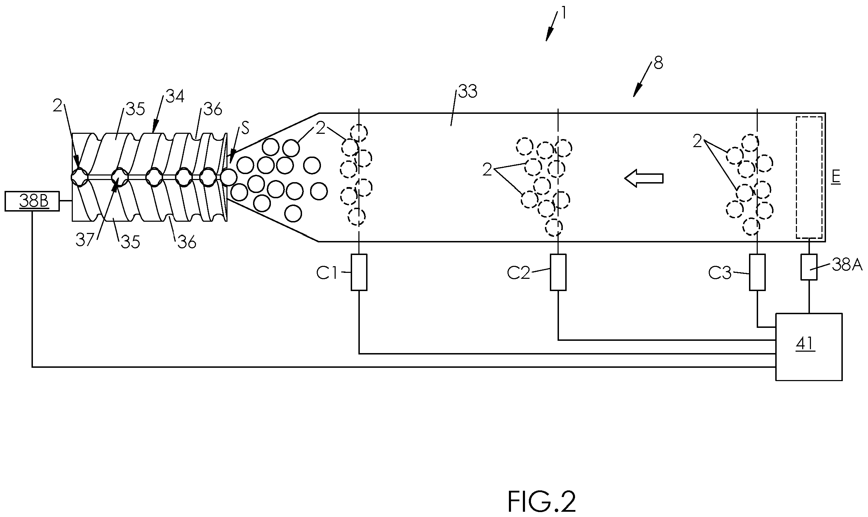

Une unité **8** de transfert de type linéaire est représentée sur la **FIG.2****.** Cette unité **8** de transfert comprend un convoyeur **33** linéaire. Le convoyeur **33** est par ex. à bande, à tapis ou encore à rouleaux. Le convoyeur **33** s'étend d'un point **E** d'entrée jusqu'à un point **S** de sortie.

Au point **E** d'entrée, les récipients **2** sont pris en charge à la sortie d'une unité de traitement située en amont (par ex. l'unité **5** de formage). Au point **S** de sortie, les récipients **2** peuvent être pris en charge directement par une unité de traitement (par ex. l'unité **6** de remplissage ou l'unité **7** d'étiquetage), ou par un dispositif **34** de mise au pas qui espace progressivement les récipients **2** d'une distance prédéterminée correspondant à l'écartement entre deux postes de traitement successifs sur l'unité de traitement placée en aval de l'unité **8** de transfert.

Dans l'exemple illustré sur la **FIG.2****,** le dispositif **34** de mise au pas est du type à vis sans fin. A cet effet, il comprend deux rouleaux **35** adjacents pourvus de rainures **36** hélicoïdales symétriques qui, ensemble, forment une série d'alvéoles **37** enserrant chacun un récipient **2** pour l'accélérer au fur et à mesure de la rotation des rouleaux **35.**

L'unité **8** de transfert linéaire est pourvue d'une motorisation **38A** entraînant le convoyeur **33.** Dans l'exemple illustré, l'unité **8** de transfert est également pourvue d'une motorisation **38B** entraînant le dispositif **34** de mise au pas.

Cette unité **8** de transfert de type linéaire peut remplir une fonction d'accumulation temporaire des articles (ici des récipients **2**) pour constituer un stock tampon destiné à absorber d'éventuels différentiels de vitesse entre des machines situées en amont (par ex. l'unité **5** de formage) et des machines situées en aval (par ex. l'unité **7** d'étiquetage).

Une unité **9** de transfert de type rotatif est représentée sur la **FIG.3****.** Cette unité **9** de transfert comprend une roue **39** et une pluralité d'organes **40** de préhension (ici des pinces) montés sur la roue **39** à une périphérie de celle-ci.

La roue **39** est solidaire d'un arbre entraîné en rotation cyclique par une motorisation **26.** Dans l'exemple illustré, l'unité **9** de transfert est couplée à l'unité **7** d'étiquetage. Dans ce cas, le carrousel **23** de l'unité **7** d'étiquetage et la roue **39** de l'unité de transfert peuvent être entraînés par une motorisation **26** commune, par ex. via des poulies et des courroies.

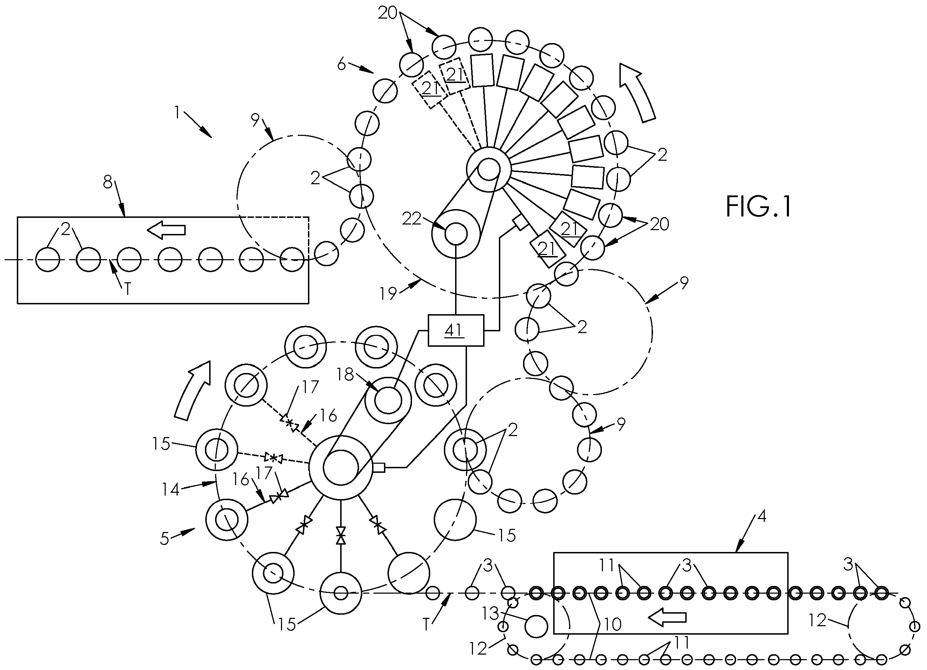

D'autres unités **9** de transfert de type rotatif sont illustrées schématiquement en trait mixte sur la **FIG.1****.** Ces unités **9** de transfert sont intercalées, dans cet exemple, d'une part entre l'unité **5** de formage et l'unité **6** de remplissage, d'autre part entre l'unité **6** de remplissage et une unité **8** de transfert de type linéaire, en aval de laquelle peut être située l'unité **7** d'étiquetage.

Dans ce cas, une unité **9** de transfert est de préférence intercalée entre l'unité **8** de transfert linéaire et l'unité **7** d'étiquetage. Ainsi, les récipients **2** mis au pas à la sortie **S** de l'unité **8** de transfert linéaire sont prélevés à intervalles constants par l'unité **9** de transfert rotatif et délivrés au carrousel **23** de l'unité **7** d'étiquetage.

Comme illustré schématiquement sur les dessins, l'installation **1** comprend en outre une unité **41** de contrôle qui assure le pilotage de l'installation **1.**

A cet effet, l'unité **41** de contrôle commande au moins l'unité **4** de conditionnement thermique, l'unité **5** de formage et l'unité **8, 9** de transfert (ou chaque unité **8, 9** de transfert) en leur imposant à chacune une consigne de vitesse proportionnelle à une cadence de production des récipients **2.**

Dans l'exemple illustré, l'unité **41** de contrôle commande également l'unité **6** de remplissage et l'unité **7** d'étiquetage, à chacune desquelles elle impose également une consigne de vitesse proportionnelle à la cadence de production des récipients **2.**

Plus précisément, l'unité **41** de contrôle est reliée aux motorisations qui animent les unités de traitement (ou de transfert), dont elle contrôle la vitesse (linéaire ou de rotation).

La cadence de production est le nombre de récipients **2** produits (ou d'articles manipulés) par unité de temps (par ex. par heure). Il s'agit par conséquent d'un débit.

Eh théorie, la cadence de production est identique pour chaque unité de traitement, c'est-à-dire que les débits des récipients **2** sortant des différentes unités de traitement sont identiques. Il peut cependant y avoir quelques variations, qui, comme nous l'avons évoqué, peuvent être absorbées temporairement par accumulation des récipients **2** dans des zones de stockage tampon (en l'occurrence, dans l'unité **8** de transfert linéaire représentée sur la **FIG.2**).

En revanche, la vitesse (linéaire ou de rotation) est propre à chaque unité de traitement et à chaque unité de transfert. En d'autres termes, à chaque unité de traitement ou de transfert est associée, dans une mémoire de l'unité **41** de contrôle, une consigne de vitesse à appliquer à la motorisation animant cette unité de traitement ou de transfert pour lui permettre de respecter une cadence de production prédéterminée.

L'unité **41** de contrôle est programmée pour conduire des actions permettant de maintenir la production, même à cadence réduite, y compris en cas d'incident affectant le fonctionnement (normal) de l'installation **1.**

Plus précisément, l'unité **41** de contrôle est programmée pour :
- détecter un incident affectant le fonctionnement de l'installation **1** ;
- déterminer une réduction de la cadence de production induite par l'incident ;
- appliquer cette réduction à la consigne de vitesse de chaque unité de traitement.

Parmi les incidents susceptibles d'affecter le fonctionnement de l'installation, citons, à titre d'exemple :
a) un défaut affectant un ou plusieurs dispositif(s) **16** d'injection associé à un (des) moules **15** de l'unité **5** de formage, se traduisant notamment par une baisse du débit de gaz dans les ébauches **3** ;
b) un défaut affectant une ou plusieurs électrovannes **17** de l'unité **6** de remplissage, se traduisant notamment par une baisse du débit de remplissage des récipients **2** ;
c) l'épuisement d'une bobine **28** sur l'unité d'étiquetage, se traduisant par la mise hors service du dispositif **25** d'étiquetage correspondant.

Ces trois cas peuvent être détectés directement par l'unité **41** de contrôle, au moyen de capteurs.

Dans le cas a), l'unité **5** de formage est par ex. équipée de capteurs de pression (ou de débit) sur chaque dispositif **16** d'injection. Ces capteurs sont reliés à l'unité **41** de contrôle à laquelle ils communiquent la valeur instantanée de la pression (ou du débit) de fluide circulant dans le dispositif **16** correspondant.

Dans le cas b), l'unité **6** de remplissage est par ex. équipée de capteurs de débit pour chaque poste **20** de remplissage. Ces capteurs sont reliés à l'unité **41** de contrôle à laquelle ils communiquent la valeur instantanée du débit de fluide circulant dans la vanne **21** de remplissage correspondante.

Dans le cas c), les capteurs **32** déjà évoqués sont reliés à l'unité **41** de contrôle à laquelle ils communiquent à chaque instant une information relative à la masse ou au volume de la bobine **28** présente sur chaque dérouleur **27.**

Il se peut qu'un incident survenu sur une unité de traitement et susceptible d'affecter l'installation **1** ne soit pas détectable directement, mais qu'il soit détectable indirectement par les effets induits sur l'installation **1** en amont ou en aval de l'unité de traitement concernée.

Ainsi, une unité de traitement fonctionnant de manière dégradée située en aval de l'unité **8** de transfert linéaire peut provoquer une accumulation de récipients **2** sur le convoyeur **33.** Dans ce cas, illustré en pointillés sur la **FIG.2****,** plusieurs niveaux d'accumulation peuvent être atteints dans l'unité **8** de transfert linéaire, correspondant à des réductions respectives différentes de la cadence de production.

Dans l'exemple illustré sur la **FIG.2****,** trois niveaux d'accumulation distincts sont définis. Pour détecter chaque niveau d'accumulation, l'unité **8** de transfert linéaire est équipée de capteurs **C1, C2, C3** (par ex. optiques), reliés à l'unité **41** de contrôle à laquelle chacun adresse une information relative à la présence (ou non) d'articles (ici de récipients **2**).

L'unité **41** de contrôle est alors programmée pour déterminer une réduction de la cadence de production proportionnelle au niveau d'accumulation atteint. L'unité **41** de contrôle est programmée, avant tout, pour déterminer une réduction de la vitesse appliquée à la motorisation **38A** (et, le cas échéant, à la motorisation **38B**) d'un taux proportionnel au niveau d'accumulation atteint (c'est-à-dire détecté par au moins un capteur **C1, C2, C3**).

Ainsi, l'unité **41** de contrôle peut être programmée pour déterminer une réduction de la cadence de production (et avant tout de la vitesse de la motorisation **38A**) :
- d'un taux faible (typiquement 20%) lorsque l'accumulation atteint un premier niveau faible (détecté par le capteur **C1** représenté à gauche sur la **FIG.2**) ;
- d'un taux moyen (typiquement 40%) lorsque l'accumulation atteint un deuxième niveau moyen (détecté par le capteur **C2** représenté au centre sur la **FIG.2**) ;
- d'un taux élevé (typiquement 80%) lorsque l'accumulation atteint un troisième niveau élevé (détecté par le capteur **C3** représenté à droite sur la **FIG.2**).

L'unité **41** de contrôle est programmée pour, une fois calculée la réduction de cadence induite par l'incident détecté (directement ou indirectement), appliquer cette réduction à la consigne de vitesse de chaque unité de traitement (ou de transfert).

De la sorte, la cadence réelle de production est recalée sur la cadence calculée par l'unité **41** de contrôle compte tenu de la réduction induite par l'incident.

Cette réduction adaptée de la cadence réelle de production permet de ralentir l'installation **1** sans toutefois l'arrêter, de sorte à permettre une éventuelle intervention préalable qui ne nécessite pas un arrêt complet de l'installation **1.**

Ainsi, dans le cas c) évoqué ci-dessus, la réduction de la cadence de production consiste, pour l'unité **7** d'étiquetage, à effectuer les opérations suivantes :
- réduire la consigne de vitesse appliquée à l'unité **7** d'étiquetage (c'est-à-dire, dans l'exemple illustré, la consigne de vitesse appliquée à la motorisation **26**) d'un taux égal au taux d'indisponibilité des dispositifs **25** d'étiquetage ;
- shunter (en d'autres termes, by-passer) le(s) dispositif(s) **25** d'étiquetage indisponible(s) - c'est-à-dire, dans l'exemple précité, celui ou ceux dont la bobine **28** est vide ;
- commander l'étiquetage de l'ensemble des récipients **2** au moyen des dispositifs **25** d'étiquetage opérationnels.

Le shunt de chaque dispositif **25** d'étiquetage indisponible consiste par ex. à écarter le rouleau **30** du trajet des récipients **2** (c'est-à-dire du carrousel **23**). A cet effet, le rouleau **30** est avantageusement monté sur un support mobile (en translation ou en rotation) dont le déplacement est commandé par l'unité **41** de contrôle.

Il résulte de ce qui précède une réduction de la cadence d'un taux égal au taux d'indisponibilité des dispositifs d'étiquetage (33% dans l'exemple précité, où un dispositif **25** d'étiquetage sur trois est indisponible).

L'unité **41** de contrôle répercute cette réduction de cadence sur les autres unités de traitement (et de transfert) par réduction de leurs vitesses respectives du même taux.

Lorsque l'incident est terminé, l'unité **41** de contrôle en est informée.

Ainsi, dans le cas c) évoqué ci-dessus, une fois le(s) dispositifs **25** d'étiquetage à nouveau opérationnel(s) (c'est-à-dire, dans l'exemple illustré, une fois installée une nouvelle bobine **28** sur le ou chaque dispositif **25** d'étiquetage épuisé), l'unité **41** de contrôle reçoit du capteur **C1, C2** ou **C3** correspondant un signal caractéristique de la disponibilité du (ou des) dispositifs **25** d'étiquetage (et caractéristique, ici, la présence d'une bobine **28** pleine), de sorte que l'unité **7** d'étiquetage peut à nouveau (avec le reste de l'installation **1**) tourner à plein régime.

L'unité **41** de contrôle augmente en conséquence les consignes de vitesses des unités de traitement (ou de transfert) à leurs valeurs nominales respectives (correspondant à la production normale), de sorte à augmenter la cadence de production jusqu'à sa valeur nominale (correspondant à la production normale).

Il se peut que la remontée de cadence nécessite une progression par paliers, pour éviter que tant les unités de traitement (ou de transfert) que les articles **2, 3** ne subissent des accélérations trop brutales susceptibles de les endommager.

A cet effet, la force de l'accélération commandée sur chaque unité de traitement (ou de transfert) par l'unité **41** de contrôle peut être inversement proportionnelle à la force de décélération commandée sur chaque unité de traitement lors de la diminution de cadence imposée par l'incident. Ainsi, cette accélération peut être :
- forte si la diminution de cadence était initialement faible ;
- moyenne si la diminution de cadence était initialement moyenne ;
- faible si la diminution de cadence était initialement forte.

Des essais conduits sur une installation **1** de production de récipients **2** a montré l'efficacité du procédé de pilotage décrit ci-dessus, qui permet non seulement de maintenir la production (certes à cadence réduite) mais également de maintenir une bonne qualité des récipients **2** produits.

On notera que la présente description ne saurait être considérée comme limitée aux modes de réalisation décrits ci-dessus à titre d'exemple, et que certaines variantes ou alternatives à la portée d'un homme du métier pourraient être considérées sans sortir du cadre de l'invention.

## Revendications

1. Procédé de pilotage d'une installation (**1**) de manutention d'articles (**2**), cette installation (**1**) comprenant au moins :
- Un système (**5, 6, 7, 8**) de transport des articles, qui comprend au moins un support (**14, 19, 23, 33**) mobile et une motorisation (**18, 22, 26, 38A, 38B**), couplée au support (**14, 19, 23, 33**) mobile pour déplacer celui-ci le long d'un trajet de transport ;
- Une unité (**41**) de contrôle reliée à la motorisation (**18, 22, 26, 38A**, **38B**) et programmée pour entraîner celle-ci selon une consigne prédéterminée de vitesse, proportionnelle à une cadence de transport des articles procurée par l'installation (**1**) ;
ce procédé étant **caractérisé en ce qu'**il comprend les opérations consistant à :
- détecter, par l'intermédiaire de l'unité de commande (**41**), un incident ralentissant un rythme de production normal de l'installation (1), l'unité de commande (**41**) étant programmée pour commander plusieurs unités de traitement (**5, 6, 7, 8, 9**), chaque unité de traitement étant équipée d'un ou de plusieurs capteurs (**C1, C2, C3**), dans lequel la détection comprend un ou plusieurs des capteurs (**C1, C2, C3**) communiquant à l'unité de contrôle (**41**) un défaut dans un composant (1**6, 18, 20, 21, 25**, **28, 27**) d'une unité de traitement de la pluralité d'unités de traitement, dans lequel l'unité de traitement est choisie parmi une unité de conditionnement thermique (**4**), une unité de formage (**5**), une unité de remplissage (**6**), et une unité d'étiquetage (**7**), et dans lequel chaque unité de traitement est reliée à une unité de traitement en aval par une ou plusieurs unités de transfert (**8, 9**), dans laquelle chaque unité de traitement et chaque unité de transfert a une première consigne de vitesse pendant le fonctionnement normal de l'installation, et dans laquelle la première consigne de vitesse peut être identique ou différente pour chaque unité de traitement et chaque unité de transfert, de sorte que l'unité de commande (**41**) peut contrôler la première consigne de vitesse indépendamment de toute autre unité de traitement ou unité de transfert ;
- calculer, par l'unité de commande (**41**), une réduction du taux de production de l'unité de traitement induite par le défaut ;
- réduire, par l'unité de commande (**41**), la vitesse d'une ou de plusieurs unités de traitement ou de transfert à une deuxième valeur de consigne de vitesse, de telle sorte que la réduction de la vitesse soit proportionnelle au ralentissement du taux de production, dans lequel chaque unité de traitement et chaque unité de transfert comprend une motorisation respective (1**3, 18, 22, 26, 38A, 38b**) couplée à un support mobile respectif (**11, 12, 14, 19, 23, 33**), dans lequel l'unité de commande (**41**) contrôle la seconde consigne de vitesse en réduisant la vitesse de la motorisation ; et
- à accélérer la deuxième vitesse de consigne à un taux inverse de la réduction lorsque l'incident est corrigé, de sorte que le taux de production revienne à la normale.

2. Procédé suivant la revendication 1 **caractérisé en ce que** le support mobile de chaque unité de traitement est un carrousel, et dans laquelle le support mobile de chaque unité de transfert est un convoyeur linéaire ou un carrousel, et **en ce que** l'installation peut comprendre plusieurs unités de transfert dotées de convoyeurs linéaires, de carrousels ou d'une combinaison de ceux-ci.

3. Procédé suivant la revendication 1 **caractérisé en ce que** l'incident détecté se produit dans une unité d'étiquetage (**7**), l'unité d'étiquetage comprenant une pluralité de stations de traitement (**24**) alimentant une pluralité de dispositifs d'étiquetage périphériques (**25**) et **en ce qu'**il consiste au moins à :
- détecter, par l'intermédiaire d'un capteur, l'indisponibilité d'au moins un des périphériques d'étiquetage (**25**) ;
- réduire la première consigne de vitesse de l'unité d'étiquetage (**7**) d'un taux égal au taux d'indisponibilité des dispositifs d'étiquetage (**25**) ;
- shunter le ou les dispositifs d'étiquetage indisponibles (**25**) ; et
- contrôler l'étiquetage de tous les conteneurs (**2**) au moyen des dispositifs d'étiquetage opérationnels (**25**).

4. Procédé suivant la revendication 1 **caractérisé en ce que** l'incident détecté se produit sur une unité de transfert (**8**) comprenant un convoyeur linéaire, dans lequel le convoyeur linéaire s'étend d'un point d'entrée (**E**) à un point de sortie (**S**), et **en ce qu'**il consiste à :
- détecter, via des capteurs (**C1, C2, C3**), une accumulation d'articles (**2**) sur le convoyeur linéaire (**33**) ;
- réduire la vitesse de l'unité de transfert (**8**) jusqu'à la deuxième consigne de vitesse à un rythme proportionnel au niveau d'accumulation détecté ;
- réduire la consigne de vitesse qui est appliquée à la motorisation (**38A**) entraînant le convoyeur linéaire (**33**).
